# EUROPEAN PATENT SPECIFICATION

(11) **EP 4 112 895 B1**
(45) Date of publication and mention of the grant of the patent: **01.01.2025**
(21) Application number: 21183237.3
(22) Date of filing: 01.07.2021
(51) Int. Cl.: F01N 3/20, F01N 13/08, F01N 13/00, F01N 3/28

(54) **EXHAUST GAS TREATMENT DEVICE**
ABGASREINIGUNGSVORRICHTUNG
DISPOSITIF DE TRAITEMENT DES GAZ D'ÉCHAPPEMENT

(43) Date of publication of application: 04.01.2023
(73) Proprietor: Donaldson Company, Inc., Bloomington, MN 55431 (US)
(72) Inventor: DE RUDDER, Korneel, Minneapolis, MN 55440-1299 (US); CHAUVIN, Corine, Minneapolis, MN 55440-1299 (US); AGAR, Anil, Minneapolis, MN 55440-1299 (US); SCHELLENS, Bart, Minneapolis, MN 55440-1299 (US); PIETRZYK, Mariusz, Minneapolis, MN 55440-1299 (US); DEGELIN, Nic, Minneapolis, MN 55440-1299 (US); PANDEY, Rangesh, Minneapolis, MN 55440-1299 (US); MADDINENI, Ajay K., Minneapolis, MN 55440-1299 (US)
(74) Representative: IPLodge bv

(56) References cited:
- WO-A1-2014/172866
- WO-A1-2019/144600
- DE-A1- 102015 015 505
- US-A1- 2002 150 806
- US-A1- 2019 331 016
- US-A1- 2020 378 291

## Description

### Technical field

The present disclosure relates to exhaust treatment devices and systems for internal combustion engines, especially to exhaust treatment devices that are compact, solid and perform well.

### Background art

For environmental reasons, the emission of exhaust gases of internal combustion engines needs to be reduced and limited by using exhaust aftertreatment systems.

Existing exhaust treatment systems of the Selective Catalytic Reduction type are known since a long time. In such systems, a urea solution is mixed with an exhaust flow. The mixed flow then passes through an SCR substrate that converts some of the exhaust gases into harmless gases, which are leaving the system into the environment via a system outlet.

The acceptable exhaust gas threshold has been decreasing over time, such that systems have been introduced which include means for controlling the NOx emission actively by including a nitrous oxides (NOx) sensor at the outlet of the system and using the measured values to feed into an exhaust control or diagnostics algorithm which allows to control and/or adjust the exhaust aftertreatment system's functioning. Often this NOx sensor is used in a type of diagnostic system (On Board Diagnostic), to alert the end user when an unacceptable NOx value is detected.

In existing systems, the NOx sensor readings have a large degree of fluctuation, resulting in less-than-optimal performance.

There exists a need in the industry for improved SCR systems, which provide means that result in representative NOx sensor readings, which are compact, mechanically robust and can be produced at relatively low cost.

In WO2014172866A1 an exhaust after-treatment component for treating an exhaust stream produced by an engine is disclosed. The component includes a housing having an inlet and an outlet, an exhaust treatment substrate provided within the housing between the inlet and the outlet, a dosing module for dosing an exhaust treatment fluid into the exhaust stream proximate the inlet, and a mixing assembly located within the housing between the dosing module and the exhaust treatment substrate.

The mixing assembly includes an outer perforated pipe and an inner perforated pipe, wherein the inner perforated pipe is located within and co-axially aligned with the outer perforated pipe, and a plurality of first perforations of the inner perforated pipe are provided at a position that forces the exhaust stream to flow in a reverse direction before exiting the mixing assembly through a plurality of second perforations of the outer perforated pipe.

WO2019144600A1 discloses an exhaust after-treatment device, comprising a first after-treatment component and a second after-treatment component, the first after-treatment component comprises a first mixing chamber component, the second after-treatment component comprises a second mixing chamber component. The first mixing chamber component is detachably connected to the second mixing chamber component, the first mixing chamber component comprises a first mixing tube located therein and a porous tube at least partly located in the first mixing tube; the second mixing chamber component comprises a second mixing tube located therein and a flap located in the second mixing tube; and the porous tube further extends into the second mixing tube and is located upstream of the flap. The device facilitates maintenance, increases the distance and time of urea evaporation, improves the uniformity of airflow mixing, and enhances the anti-crystallization ability.

### Summary of the disclosure

It is an object of the present disclosure to provide an exhaust gas treatment device according to claim 1.

In a first aspect of the present disclosure, an exhaust gas treatment device is disclosed, preferably for use on a vehicle. It comprises a housing, comprising an inner volume and an inlet and an outlet, the housing defining a flow path for exhaust gas from the inlet to the outlet. It comprises at least one selective catalytic substrate arranged within the housing, having an outlet face with surface area (A) and dividing the inner volume in a first sub volume near the inlet and second sub volume near the outlet. The outlet is defined or at least partially defined by an outlet tube, which is preferably cylindrical in shape, having a circular cross-section perpendicular on a longitudinal axis of the outlet tube. The outlet tube extends through an outer wall of the housing and has an internal portion extending into the second sub volume and an external portion extending away from the housing. A baffle plate is arranged within the second sub volume, dividing the second sub volume in a downstream portion and an upstream portion.

The outlet tube is fixed to the baffle plate at or near a first axial end of the outlet tube. With the expression "at or near" it is meant that the first axial end of the outlet tube substantially abuts the plane of the baffle plate. It can abut the plane of the baffle plate or another plane which is parallel to the plane of the baffle plate, and which is removed from the plane of the baffle plate for no more than 5 cm, or no more than 4, 3, 2, 1 cm. In the latter case, the outlet tube is somehow extending through the baffle plate for a small distance. This can simplify manufacturing.

The outlet tube typically has a length of more than 0.5 m; or more than 0.75m, or more than 1 m, or more than 1.5m.

A sensor device for measuring exhaust gas properties is arranged along the external portion of the outlet tube. The sensor device is preferably suitable and arranged for communication with a diagnostics platform of the vehicle. It can for instance be a NOx sensor device but can be any other sensor device relevant for exhaust gas. For instance, it can comprise a sensor for other exhaust gas constituents or a temperature sensor. For instance, it can comprise an ammonia (NH3) sensor, an oxygen sensor, or a combination of these.

The baffle plate comprises a first set of baffle plate openings in an area of the baffle plate outside of the first axial end of the outlet tube, and a sidewall of the internal portion of the outlet tube comprises a second set of outlet tube openings.

It is an advantage of embodiments of the present disclosure that the exhaust gas is properly mixed after having passed the selective catalytic substrate, such that the readout of a sensor, preferably the NOx sensor arranged downstream of the substrate, corresponds to the real average NOx value of the exhaust gas flow in the outlet tube. These embodiments are cost efficient in production and are very compact, reducing weight and volume of the exhaust gas treatment device and systems to which it belongs. Embodiments of the present disclosure also provide a mechanically robust architecture, which is especially needed in configurations where the exhaust gas treatment device is rigidly mounted to the chassis of the vehicle and does not comprise any other support structures towards the vehicle. Indeed, this is important for instance in the case of the so called "A-post pillar" positioning of the exhaust gas treatment device on a tractor or other vehicle with a driver cabin that is arranged in a suspended manner with respect to the chassis of the vehicle. In these cases, there typically is only a single support of the exhaust gas treatment device, supporting the lower end of the exhaust gas treatment device. The exhaust gas treatment device, and thus its constituting components, then need(s) to be self supporting and robust enough in use. The fact that the device is compact also helps in making it more robust.

SCR substrates are known in the art. They can for instance, but not only, comprise ceramic honeycomb base material, coated with a catalyst based on vanadium, copper zeolite or iron zeolite. Some SCR substrates do not comprise a ceramic honeycomb but comprise a metal foil structure instead. SCR substrates are preferably cylindrical in shape and can have a circular or elliptical cross-section perpendicular on a longitudinal axis of the substrate. Alternatively, they can be cuboid and have a square or rectangular cross-section perpendicular on a longitudinal axis of the substrate.

SCR substrates have a typical diameter between 11,83 cm (4.66") and 38,1 cm (15"). The outlet face surface area (A) is then preferably between 110cm² and 1140cm². Larger and smaller diameters and outlet surface areas are not excluded.

According to preferred embodiments, the exhaust gas treatment device further comprises a NH3 oxidation catalyst and/or a clean up catalyst, as they are known to the skilled person. The SCR substrate or catalyst can also be used to filter particles, for instance in a configuration known as "SCR on filter".

The housing can comprise an inlet section or manifold near the inlet, and an outlet section or manifold near the outlet. Preferably, the housing comprises a substrate section in between the inlet section and the outlet section. In preferred embodiments, the inlet section and substrate section are permanently attached to each other, and the outlet section is removably attached to the substrate section, such that the SCR substrate can be replaced.

In preferred embodiments, the circumferential wall of the SCR substrate is arranged in continuous (direct or indirect) contact with the inner sidewall of the housing, preferably in the intermediate, substrate section.

The selective catalytic substrate arranged within the housing such that all or substantially all, more than 95%, or more than 99%, of the exhaust gas flow has to pass through the substrate when flowing from inlet to outlet of the system.

Instead of a single (SCR) substrate, also a plurality of adjacent substrates can be present to perform the same function. A bridging structure may be provided to close potential gaps between such individual substrates. In such case, the outflow face comprises the combination of the outflow faces of the individual substrates, the combined outlet face having with surface area (A) being the sum of the outflow faces of the individual substrates. The plurality of adjacent substrates and the bridging structure are then also dividing the inner volume in a first sub volume near the inlet and second sub volume near the outlet.

The outlet tube is preferable cylindrical in shape but can have other shapes as for instance a cuboid shape. The cross section along a direction perpendicular to a longitudinal direction of the outlet tube can for instance be circular, elliptical or rectangular.

A baffle plate can be substantially flat. It can have a main surface extending substantially in a single plane. It can have a main front surface and a main back surface, both extending in substantially single planes; the respective planes preferably being parallel. The baffle plate can be seen as a separation wall dividing the second sub volume in a downstream portion and an upstream portion, apart from one or more flow openings.

According to preferred embodiments, the first axial end of the outlet tube is closed. The first axial end can for instance comprise an end plate closing off the outlet tube in a direction perpendicular on the longitudinal direction of the outlet tube. The end plate can for instance be planar.

It is an advantage of such embodiments, that all exhaust gas has to flow through the first set of openings in the baffle plate and afterwards through the second set of outlet tube openings present in the sidewall of the internal portion of the outlet tube. This maximises the induction of turbulence, and mixing of the exhaust gas flow.

According to alternative preferred embodiments, the exhaust gas treatment device further comprises at least one tube end opening in the baffle plate or the first axial end of the outlet tube to allow direct flow from the upstream portion to the outlet tube.

It is an advantage of such embodiments, that not all of the exhaust gas flow has to flow from the upstream portion of the second sub volume, though the first set of baffle plate openings and afterwards through the second set of outlet tube openings present in the sidewall of the internal portion of the outlet tube, reducing and optimising restriction to the flow when passing through the system when needed.

The first axial end of the outlet tube can for instance comprise an end plate partially closing off the outlet tube in a direction perpendicular on the longitudinal direction of the outlet tube. The end plate can for instance be planar. In some embodiments, the end plate can correspond to a portion of the baffle plate. The end plate can comprise the at least one tube end opening.

In preferred embodiments, the first axial end of the outlet tube is open. In other words, the tube end opening corresponds to the tube opening, i.e. corresponds to the full cross-section of the outlet tube.

According to preferred embodiments, the first sub volume does not comprise a turbulence inducing or mixing device.

It is an advantage of embodiments of the present disclosure in general, that the use of an additional turbulence inducing or mixing device in a region upstream of the SCR substrate can be avoided, without sacrificing the quality of the sensor readout values. This insight allows reducing the complexity, weight and cost of the system and provides the opportunity to manufacture very compact and robust systems.

According to preferred embodiments, a distance between the outlet face of the selective catalytic substrate and the baffle plate is within the range of 0.3*(A/pi)^{1/2} to 0.45*(A/pi)^{1/2}. In preferred embodiments, this distance in smaller than 20 cm, or smaller than 15, 14, 13, 12, 11, 10 cm. In preferred embodiments, this distance in larger than 5 cm, or larger than 6, 7, 8, 9 or 10 cm.

It was found that the distance between the outlet face of the selective catalytic substrate and the baffle plate is a parameter that can be used to tune the efficiency and pressure loss (flow restriction) of the disclosed exhaust gas treatment devices. This distance should not be too small (resulting in a too low mixing performance and eventually in a less accurate sensor readout, as well as too high pressure losses) and not too large (which would not further improve mixing but would reduce compactness and robustness of the system).

According to preferred embodiments, a total surface area defined by the first set of openings is larger than a total surface area of the second set of openings.

It is an advantage of such configuration that the mixing is hereby improved.

According to the invention, the total surface area defined by the first set of openings is within the range of 0.15A to 0.23A. It has been shown that this is an optimal range for efficient turbulence generation by the baffle plate.

According to preferred embodiments, each of the openings of the first set of openings has a size within the range of 0.0009A to 0.0013A. It has been shown that this is an optimal range for efficient turbulence generation by the openings of the first set of baffle plate openings. It was surprisingly found that these openings should not be too small nor too big.

According to preferred embodiments, the number of openings of the first set of openings is within the range of 14 to 22. This is an optimal range in view of the optimal ranges for the total surface area defined by the first set of openings and the optimal range of each of the openings of the first set of openings.

According to preferred embodiments, the openings of the first set of openings are of the same size and shape.

According to preferred embodiments, the openings of the first set of openings are distributed regularly over the baffle plate area outside of the outlet tube.

According to the invention, the total surface area defined by the second set of openings is within the range of 0.08A to 0.12A. It has been shown that this is an optimal range for efficient turbulence generation by the second set of tube openings.

According to preferred embodiments, each of the openings of the second set of openings has a size within the range of 0.009A to 0.0015A. It was surprisingly found that these openings should not be too small nor too big.

According to preferred embodiments, the number of openings of the second set of openings is within the range of 6 to 10. This is an optimal range in view of the optimal ranges for the total surface area defined by the second set of tube openings and the optimal range of each of the openings of the second set of openings.

According to preferred embodiments, the openings of the second set of openings are of the same size and shape.

According to preferred embodiments, the openings of the second set of openings have an elongate shape and are arranged parallel to a longitudinal axis of the outlet tube.

According to preferred embodiments, the openings of the second set of openings are distributed at regular angular intervals around the axis of the outlet tube.

It is an advantage of these embodiments that the turbulence induction by the second set of openings and resulting mixing effect in the outlet tube is improved with respect to for instance circular openings in the outlet tube's sidewall, without jeopardising the compactness and robustness.

This effect is even strengthened in embodiments which further comprise at least one tube end opening in the baffle plate or the first axial end of the outlet tube to allow direct flow from the upstream portion to the outlet tube, where the direct flow and indirect flow (flow through the first set of openings in the baffle plate and afterwards through the second set of outlet tube openings present in the sidewall of the internal portion of the outlet tube) are merging.

According to preferred embodiments, the total surface area defined by the first set of openings is within the range of 0.15A to 0.23A and the total surface area defined by the second set of openings is within the range of 0.08A to 0.12A. This has proven to be an optimal configuration.

According to preferred embodiments, the outlet tube is also fixed to the outer wall of the housing and a distance between a fixation location of the outlet tube at the outer wall and a fixation location of the outlet tube at the baffle plate is within the range of 0.51*(A/pi)^{1/2} to 0.77*(A/pi)^{1/2}.

These embodiments provide an optimal balance between mechanical robustness and compactness of the system.

According to preferred embodiments, the outlet tube has a cross-sectional area which is smaller than a combined total surface area of the one or more tube end openings, if such openings are present, and the one or more openings in the baffle plate.

It is an advantage that in such embodiments, the flow speed through the system is meanly determined by the cross-sectional area of the outlet tube (and the nature of the SCR substrate).

The cross-sectional area of the outlet tube preferably allows for typical exhaust gas flow rates in exhaust gas treatments systems, which are for instance between 50 and 150 m/second. Preferably, the flow velocity is within the range of 70 to 110m/s, more preferably within the range of 90-100 m/s.

According to preferred embodiments, the outlet tube comprises a cross-sectional area in the range of 0.12A to 0.20A.

According to preferred embodiments, where there are one or more tube end openings, a total surface area of the one or more tube end openings is within the range of 0.01A to 0.20A.

It is an advantage that by providing a suitable range of the relative portions of direct and indirect flow, the overall flow can be optimised.

According to preferred embodiments, where there are one or more tube end openings, a total surface area of the one or more tube end openings and the first set of one or more openings in the baffle plate is within the range of 0.16A to 0.43A.

According to preferred embodiments, a distance between the outlet face of the selective catalytic substrate and the sensor is within the range of 1.07*(A/pi)^{1/2} to 1.61*(A/pi)^{1/2}.

This is an optimal range for positioning the sensor device with respect to the outlet face of the selective catalytic substrate, allowing for a good mixing, while not jeopardising compactness of the device.

According to preferred embodiments of the present invention, the longitudinal axis of the outlet tube and the longitudinal axis of the substrate are offset, and preferably parallel. This provides the advantage of a better mixing with respect to a symmetric configuration wherein the longitudinal axis of the outlet tube and the longitudinal axis of the substrate coincide. In case the longitudinal axis of the outlet tube and the longitudinal axis of the substrate are offset, the openings of the first set of openings are preferably mainly distributed on the side of the baffle plate which is remote from the outlet tube.

According to preferred embodiments, the baffle plate further comprises scoops or louvers at one, more or all openings of the first set of openings.

According to preferred embodiments, the internal portion of the outlet tube further comprises scoops or louvers at one, more or all openings of the second set of openings.

According to preferred embodiments, the sensor is an NOx sensor, an ammonia sensor, an oxygen sensor or a combination of those.

In a second aspect of the present disclosure, which is not claimed, an exhaust system is disclosed comprising an exhaust gas treatment device according to any of the embodiments of the first aspect, further comprising a means for injecting a reductant in the exhaust gas before the exhaust gas upstream of the exhaust gas treatment device. Reductants are known in the art and can be for instance comprise dissolved urea (urea solution), anhydrous ammonia, aqueous ammonia or any other species that provides ammonia to the exhaust system.

In a third aspect of the present disclosure, which is not claimed, a vehicle comprising an exhaust system according to second aspect is disclosed, wherein the exhaust gas treatment device is rigidly mounted to the chassis of the vehicle, and does not comprise any other support structure, for instance towards a suspended cabin of the vehicle.

In a fourth aspect of the present disclosure, which is not claimed, the use of an exhaust treatment device according to any of the embodiments of the first aspect is disclosed, for reducing variability of NOx concentration at the sensor device.

### Brief description of the drawings

The disclosure will be further elucidated by means of the following description and the appended figures.
- Fig. 1 shows a state-of-the-art configuration of a vehicle/tractor comprising an exhaust treatment device.
- Fig. 2 shows a state-of-the-art exhaust treatment device.
- Fig. 3 shows another state-of-the-art exhaust treatment device.
- Fig. 4 shows an exhaust treatment device according to a first preferred embodiments of the present disclosure.
- Fig. 5 shows further details of the exhaust treatment device illustrated in Fig. 4.
- Fig. 6 shows a second preferred embodiment of the present disclosure.
- Fig. 7 shows a third preferred embodiment of the present disclosure.
- Fig. 8 shows further details of the exhaust treatment device illustrated in Fig. 4.
- Fig. 9 shows an indicative performance plot of preferred embodiments of the present invention compared to state of a state-of-the-art device.
- Fig. 10 illustrates mixing performance for an exhaust treatment device according to a first preferred embodiment of the present invention.
- Fig. 11 illustrates mixing performance for an exhaust treatment device according to a prior art device.

### Detailed description of preferred embodiments

The present disclosure will be described with respect to particular embodiments and with reference to certain drawings, but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

An SCR system features injection of AdBlue, optionally a mixer, an SCR inlet section, and SCR substrate/catalyst, optionally a NH3 clean up catalyst and an SCR outlet section. This outlet section collects the gasses coming out of the substrate and guide these into an outlet tube. This outlet tube then typically has a NOx sensor for monitoring the performance of the SCR system.

To have a good indication of the performance of the SCR system, it is important that the NOx sensor measures a representative sample of the downstream gasses and not a sample specific to a local spot of the SCR substrate outlet.

In a typical emission system, the outlet section is constructed in such a way that the distance between the substrate outlet face and the outlet end baffle is sufficiently large. This is done so that the gas velocities in the outlet chamber stay low and that the local pressure variations at the substrate outlet face are minimized. Too large deviations in local pressure can lead to sub-optimal flow repartition/distribution inside the SCR substrate.

In SCR systems with theoretically ideal mixing, all NH3 is perfectly distributed at the SCR substrate inlet face 42. Therefore, the NOx concentration at the substrate outlet face 41 is uniform and the local NOx concentration is equal to the global NOx concentration. A NOx sensor 5 placed downstream of the SCR substrate would measure the global average NOx concentration.

In real systems, SCR mixing systems are not perfect. The NH3 is not distributed 100% uniformly at the SCR substrate inlet face 42. Certain regions will have higher NH3 concentration, higher NOx conversion rates and therefore, lower NOx concentration at the outlet face 41 of the SCR substrate 4; meanwhile, other regions of the substrate, with lower NH3 concentration, will see low NOx conversion rates and therefore higher NOx concentration at the substrate outlet face 41. The NOx concentration at the substrate outlet face 41 is thus not uniform.

When one assumes a system with an upstream (engine out) NOx concentration of 1000 ppm, and an outlet tube NOx concentration target of 20ppm, then a 98% efficiency for NOx reduction is required. One can assume a 1:1 conversion rate of NOx with NH3, such than 980ppm of NH3 is needed. If the NH3 concentration varies locally with +- 2%, then the local NH3 varies from 999.6 ppm to 960.4 ppm. Downstream of the substrate, the NOx concentration then varies from 0 ppm to 40 ppm.

Depending on the location of the downstream NOx sensor 5, it might read from 0 ppm NOx to 40 ppm NOx, while the target is 20ppm. Therefore, it becomes challenging to use this NOx sensor value for a control or diagnostics algorithm.

As mentioned in previous paragraph, there are local variations of NOx concentration at the substrate outlet 41. The NOx concentration can locally deviate from the global average NOx concentration. To determine the average downstream NOx concentration, it is proposed in embodiments of the present disclosure to perform mixing of the exhaust gas between the SCR substrate outlet face 41 and the NOx sensor 5.

The flow coming out of a, for instance honeycomb, SCR substrate 4 has very little turbulence and can be considered to be laminar or close to laminar. In the absence of any flow disturbing elements in the outlet section, this low turbulence flow is continued in the outlet tube 3. In such a condition, it takes a long distance for the exhaust gasses to mix and to ensure that the local NOx concentration is equal to the global NOx concentration. In an outlet with a simple geometry (e.g. axial outlet), a NOx sensor typically measures the gas composition of a small portion of the exhaust gas that can be traced back to a small portion of the substrate 4.

To ensure that a good representative sample of the exhaust gasses pass through the NOx sensor 5, a long distance between the SCR substrate outlet face 41 would a priori be needed. Alternatively, as discovered by the inventors and proposed in embodiments of the present disclosure, additional turbulence or mixing can be generated between the substrate outlet face 41 and the NOx sensor 5. This mixing or turbulence can be generated by providing additional flow disturbing (preferably turbulence inducing or mixing) elements. Such element can be provided also by shaping the components which are already present in the system in such a way that large scale turbulence is additionally generated.

Another advantage of embodiments of the present disclosure relates to agriculture tractor applications, wherein the SCR system is typically placed in front of the cabin's A-post pillar. A lower or bottom part of this exhaust gas treatment device houses the SCR inlet section, the SCR substrate and the SCR outlet section, while the top part consists of an outlet tube that discharges the exhaust gasses high above the tractor/cabin.

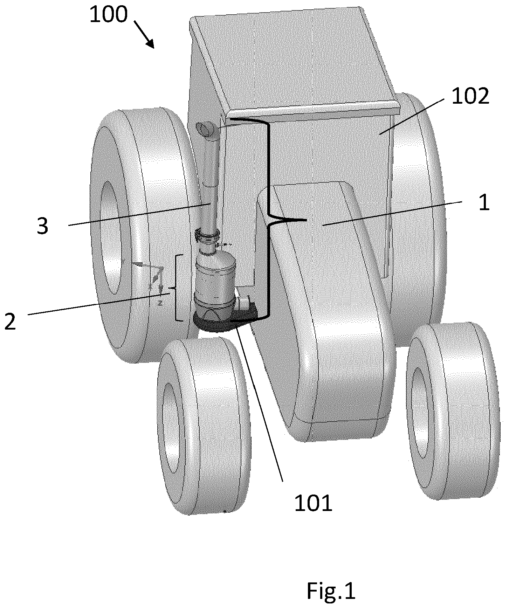

Typically, as illustrated in Fig. 1, the cabin 102 of a tractor 100 is suspended and/or mounted by flexible elements on the tractor chassis, while the SCR unit 2 is mounted rigidly from the bottom to the chassis (rigid support 101). Therefore, the cabin pillar can not be used to support the top part of this SCR system 1. The outlet tube 3 is support only by the (housing 2 of the) SCR system 1.

Due to vibration of the full machine and the SCR system 1 with outlet tube 3, there is significant mechanical load transfer from the outlet tube 3 to the rest of the SCR system. High dynamic loads can lead to high local stresses near the welding zone of the outlet tube 3 to the SCR/housing outlet 25. In order to reduce these stresses, it has been shown to be beneficial to have a double fixation, preferably by welding, of the outlet tube 3 to the SCR outlet 25/housing 2. By having a large enough distance between both welds 36 and 37, it is possible to absorb high levels of dynamic load (e.g. bending moment) without creating high stress levels in the material.

Embodiments of the present disclosure solve the above problems (downstream mixing and structural durability) in a compact manner, with a minimal number of components.

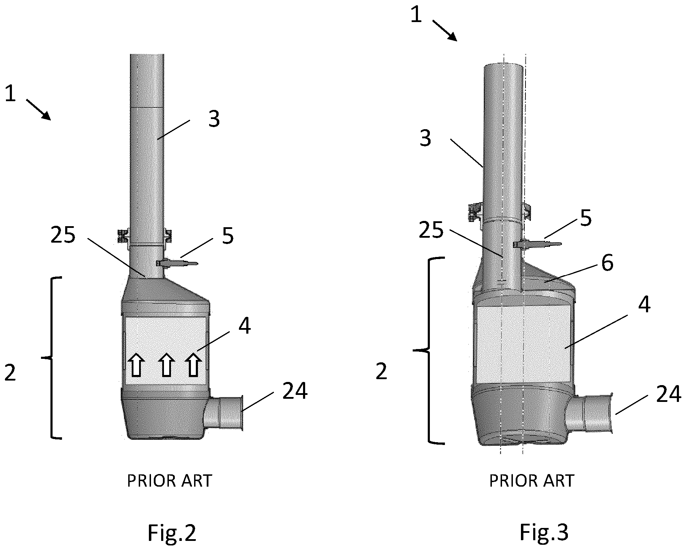

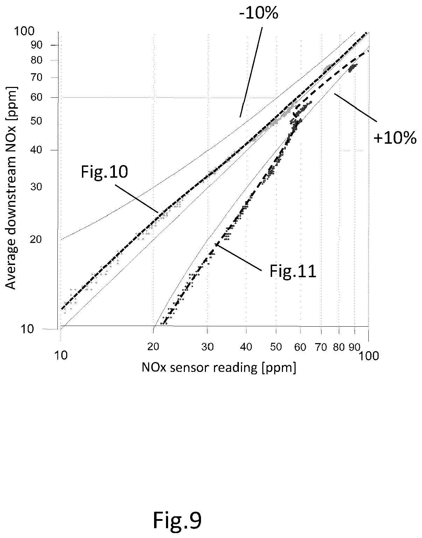

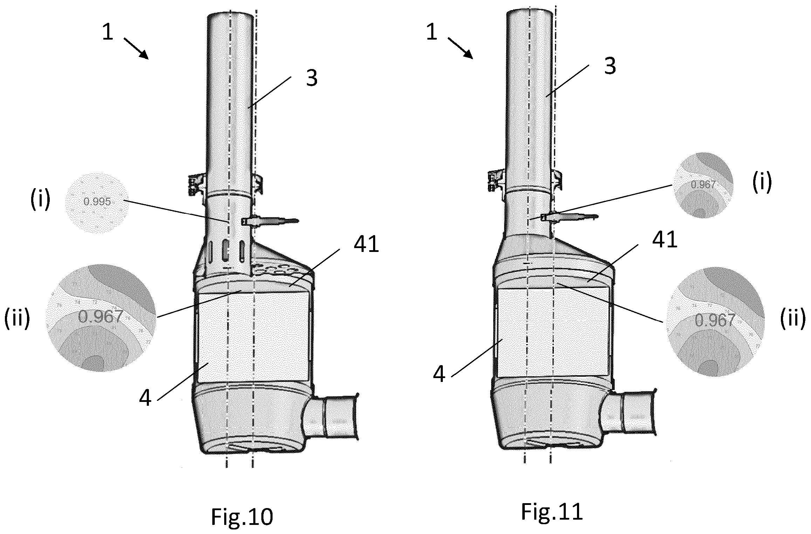

Fig. 2 shows a state-of-the-art exhaust treatment device 1. It comprises a housing 2, comprising an inner volume and an inlet 24 and an outlet 25, the housing defining a flow path for exhaust gas from the inlet 24 to the outlet 25. It comprises at least one selective catalytic substrate 4 arranged within the housing 2, dividing the inner volume in a first sub volume near the inlet 24 and second sub volume near the outlet 25. The outlet 25 is defined or at least partially defined by an outlet tube 3. The outlet tube 3 joins the outer wall of the housing 2 at the outlet 25. A sensor device 5 for measuring exhaust gas properties is arranged along the outlet tube 3. In between the outlet face 41 of the substrate 4 and the sensor device 5, no substantial turbulence creation or mixing of the exhaust gas flow is created. The result is that the NOx distribution at the level (i) of the NOx sensor 5 is far from uniform and is still strongly correlated and in some cases still very similar to the NOx distribution at the level (ii) of the outflow face 41 of the SCR 4. This is illustrated in Fig. 11, which shows the NOx distribution along a cross sectional plane perpendicular on the longitudinal axis of the outlet tube 3, at an axial location near the sensor device 5, and at an axial location near the outflow face 41. Also, fluctuations of NOx concentration over time occur at a certain location in the outlet tube 3. At any moment in time, different NOx concentrations are present for different locations along a cross sectional plane perpendicular on the longitudinal axis of the outlet tube 3. This also applies at the level of the NOx sensor 4. Depending on where the sensor is positioned and how far it reaches inwardly into the outlet tube 3, the NOx values and thus readout can be too high or too low to be representative for the total NOx emission of the exhaust gas treatment system 1. Fig. 9 illustrates the relatively large deviations of the NOx readout values from the real NOx output value of the outlet tube for such a system explained in relation with Fig. 11.

Also, the outlet tube 3 is attached to the housing 2 by a single weld, such that robustness of the system is jeopardised in use and/or when exposed to external forces.

Fig. 3 shows another state-of-the-art exhaust treatment device, which is similar to the system explained in relation with Fig. 2, but which has improved mechanical robustness. A baffle plate 6 is arranged in the volume of the housing 2 downstream of the SCR substrate 4. The outlet tube 3 extends through an outer wall of the housing 2 and has an internal portion extending into the housing and an external portion extending away from the housing 2. The outlet tube 3 is fixed to the baffle plate at a first axial end of the outlet tube 3. The outlet tube 3 is welded to the housing at the outlet 25 and to the baffle plate 6 at a first axial end of the outlet tube 3. The baffle plate comprises a tube opening corresponding to the inlet opening of the outlet tube 3. This prior art device still has the problem of providing inaccurate NOx measurements at the sensor 5.

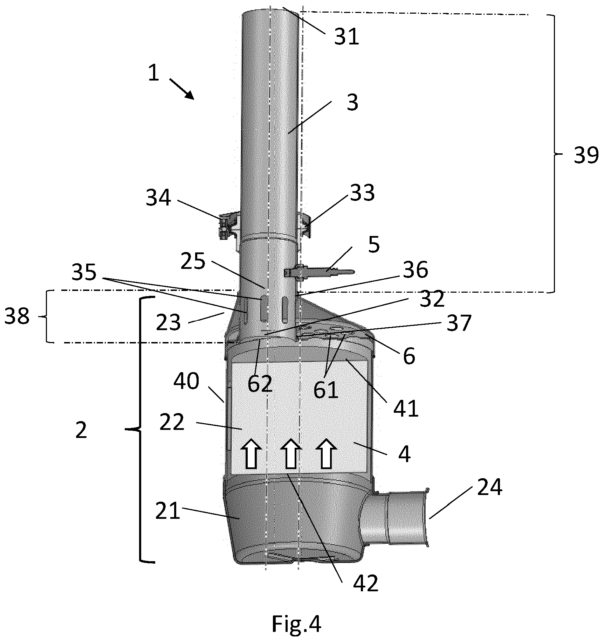

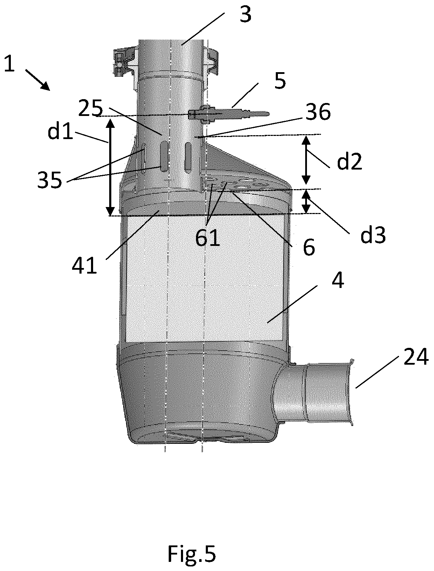

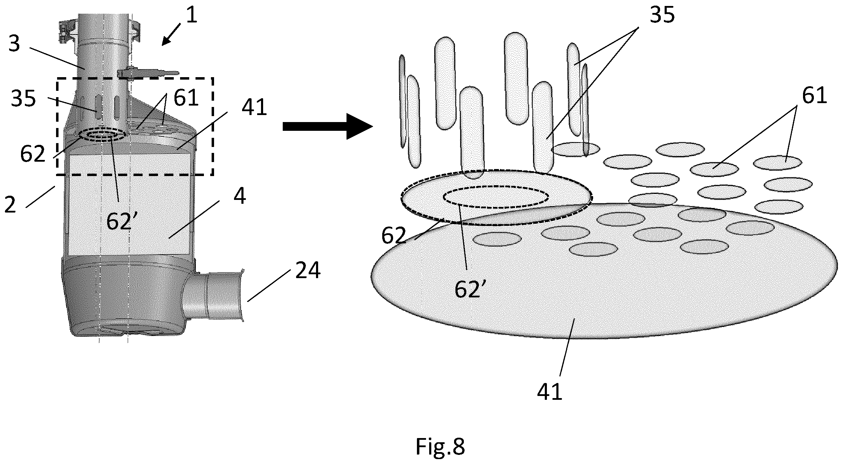

Fig. 4 shows an exhaust treatment device according to a first preferred embodiment of the present disclosure. Fig. 5 and Fig. 8 show further details of the exhaust treatment device illustrated in Fig. 4.

It comprises a housing 2, comprising an inner volume and an inlet 24 and an outlet 25, the housing 2 defining a flow path for exhaust gas from the inlet 24 to the outlet 25. The housing 2 comprises an inlet section 22, a substrate section 22 and an outlet section 23. It comprises at least one selective catalytic substrate 4 arranged within the housing, having an outlet face 41 with surface area (A) and dividing the inner volume in a first sub volume near the inlet 24 and second sub volume near the outlet 25. A spacer 40, for instance a substrate support mat comprising a fibrous material, can be provided in between the (SCR) substrate 4 and the inner sidewall of the substrate section 22 of the housing 2, to fully bridge and close off the cross-section of the housing along a direction perpendicular to a housing axis. In use, all of the exhaust gas flowing form inlet 24 to outlet 25 has to pass through the substrate 4, entering the substrate from an inlet face 42 and leaving the substrate from the outlet face 41.

The outlet 25 is defined by an outlet tube 3, which is cylindrical in shape, having a circular cross-section perpendicular on a longitudinal axis of the outlet tube 3. The outlet tube 3 extends through the outer wall of the housing 2, i.e. through the outlet section 23 of the housing 2. It has an internal portion 38 extending into the second sub volume and an external portion 39 extending away from the housing 3. A baffle plate 6 is arranged within the second sub volume, dividing the second sub volume in a downstream portion and an upstream portion.

The outlet tube 3 is fixed to the baffle plate 6 at a first axial end 32 of the outlet tube 3, by for instance welding. The second axial end 31 of the outlet tube 3 comprises a tube outlet opening. The outlet tube 3 is further fixed, preferably welded to the outlet opening 25. A tube end opening 62 is provided in the baffle plate 6 in the area corresponding to the first axial end 32 of the outlet tube 3. The tube end opening 62 abuts and corresponds to the full cross-sectional opening of the outlet tube 3.

The outlet tube can comprise two parts, a lower part and an upper part, which can be connected and attached to each other by a connector piece 33 and a clamp 34. For instance, the upper and lower piece can be connected by a partial sliding of an end of one piece into an end of the other piece. The connector piece 33 is arranged over the joint between the two pieces and the clamp 34 is applied of the connector piece 33 to apply a pressure keeping the lower and upper piece together, in a removable manner. This provides the advantage of easy maintenance and installation of the exhaust gas treatment device 1.

A NOx sensor device 5 for measuring exhaust gas properties is arranged along the external portion 39 of the outlet tube 3. The sensor device 5 is preferably suitable and arranged for communication with a diagnostics platform of the vehicle 100.

The baffle plate 6 comprises a first set of baffle plate openings 61 in an area of the baffle plate 6 outside of the first axial end 32 of the outlet tube 3, and a sidewall of the internal portion 38 of the outlet tube comprises a second set of outlet tube openings 35.

The baffle plate openings 61 of the first set of openings are round and of identical size. They are evenly distributed over the baffle plate 6 is as far as this is not hindered by the first axial end 32 of the outlet tube 3. The openings of the first set of openings can also have other shapes, as for instance elliptical, obround, rectangular, hexagonal and similar shapes.

The outlet tube openings 35 of the second set of openings are of similar size and shape and have an obround or racetrack circumference. The axis of these outlet tube openings 35 extend in a direction parallel to the longitudinal axis of the outlet tube 3 and the openings 35 are provided at regular angular intervals, all along the contour of the outlet tube 3.

This baffle 6 has an open structure embodied as the first set of baffle openings 61 that induces large scale turbulence (e.g. large holes) in use. The flow passes through the first set of baffle openings 61 and then flows through the second set of (large) outlet tube openings 35 in the outlet tube sidewall (e.g. perforations, slots, louvers ...).

Due to the combination of structural (baffle) and turbulence inducing structures (large openings or perforations in baffle plate and outlet tube sidewall), both the issue of structural durability and downstream mixing is handled in a compact outlet structure, with a minimal number of components.

Preferred embodiments of the present disclosure can be provided with one or more or all of the following characteristics, depending on the intended effect and advantages to be obtained by the device:
- The SCR substrate outlet face 41 has a cylindrical or oval cross-sectional area A;
- The distance d3 between the SCR substrate outlet face 41 and the baffle plate 6 is 0.37*(A/3.14)^0.5;
- The individual openings 61 of the first set of baffle openings have a size of 0.0011*A;
- the total sum of all the openings 61 of the first set of baffle openings is 0.19*A;
- The total number of openings 61 of the first set of baffle openings is 18;
- The outlet tube 4 cross sectional area is 0.16*A, and the tube end opening 62 abuts and corresponds to the full cross-sectional opening of the outlet tube 3;
- The openings of the second set of openings 35 in the sidewall of the outlet tube 3 have an individual cross-sectional area of 0.012*A;
- the sum of all individual cross-sectional areas of the openings of the second set of openings is 0.10*A. The total number of openings of the second set of openings is 8;
- The distance d2 between the two weld locations 36, 37 of the outlet tube 3 is 0.64*(A/3.14)^0.5;
- The distance d1 from the substrate outlet face 41 to the NOx sensor 5 is 1.34*(A/3.14)^0.5.

These above parameters and values are indicative, and the respective effects and advantages are believed to be present over the respective combinations of claimed ranges.

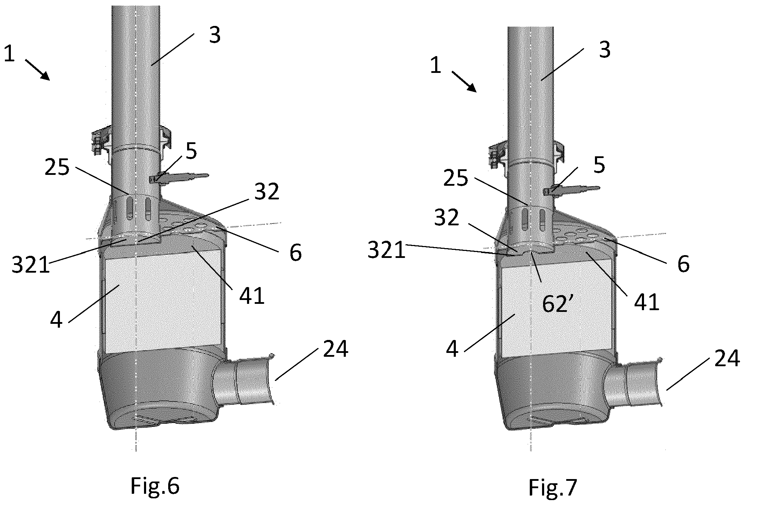

Fig. 6 shows a second preferred embodiment of the present disclosure, which is similar to the first preferred embodiment but differs in that the outlet tube 3 has a closed first axial end 32. The first axial end 32 can for instance comprise an end plate 321 closing off the outlet tube 3 in a direction perpendicular on the longitudinal direction of the outlet tube 2. The end plate 321 can for instance be formed by a portion of the baffle plate 6. Optionally, the first axial end 32 of the outlet tube 3 also extends through the baffle plate 6 for a short distance, which can ease manufacturing. In such embodiments, the end plate 321 is provided at the first axial end 32 of the outlet tube 3 and does not correspond to the baffle plate 6. In such embodiments, all of the exhaust gas flow is forced to flow through the first set of openings 61 of the baffle plate 6 first and thereafter through the second set op openings 35 in the outlet tube 3.

Fig. 7 shows a third preferred embodiment of the present disclosure, which is similar to the second preferred embodiment but differs in that the end plate 321 arranged at the first axial end 32 of the outlet tube 3, comprises a tube end opening 62' which does not span the whole diameter to the outlet tube 3. The end plate 321 can for instance be formed by a portion of the baffle plate 6. Optionally, the first axial end 32 of the outlet tube 3 also extends through the baffle plate 6 for a short distance, which can ease manufacturing. In such embodiments, the end plate 321 is provided at the first axial end 32 of the outlet tube 3 and does not correspond to the baffle plate 6.

Fig. 9 shows an indicative performance plot of preferred embodiments of the present invention compared to state of a state-of-the-art device. It displays the relation between average downstream NOx value (in ppm) (real value) versus the actual NOx sensor reading (ppm). Relatively large deviations of the NOx readout values from the real NOx output value of the outlet tube exist for an exhaust treatment device described in relation with Fig. 11, while for an exhaust treatment device described in relation with Fig. 10 these values are corresponding substantially better.

Fig. 10 illustrates mixing performance for an exhaust treatment device 1 according to a first preferred embodiment of the present invention. While the NOx distribution (i) at the outlet face 41 of the substrate 4 is relatively heterogeneous, the NOx distribution (ii) at the level of the NOx sensor 5 has been strongly homogenised, resulting in an accurate readout of the NOx sensor 5.

Fig. 11 illustrates mixing performance for an exhaust treatment device 1 according to a prior art device described in relation with Fig. 2. Here, the NOx distribution (i) at the outlet face 41 of the substrate 4 is heterogeneous and identical to the NOx distribution (i) of Fig. 10, and the NOx distribution (ii) at the level of the NOx sensor 5 has not or not substantially homogenised to allow for an accurate sensor readout.

It will be appreciated by the skilled person that the disclosure provides improved exhaust gas treatment devices 1, which provide means that result in representative and accurate NOx sensor readings, which are compact, robust (especially having low stress concentration near the fixation zones of the outlet tube to the housing/baffle plate) and can be produced at relatively low cost.

## Claims

1. An exhaust gas treatment device (1), comprising:
- a housing (2), comprising an inner volume and an inlet (24) and an outlet (25), said housing (2) defining a flow path for exhaust gas from said inlet (24) to said outlet (25);
- at least one selective catalytic substrate (4) arranged within said housing (2), having an outlet face (41) with surface area A and dividing said inner volume in a first sub volume near said inlet (24) and second sub volume near said outlet (25);
- said outlet (25) being at least partially defined by an outlet tube (3);
- said outlet tube (3) extending through an outer wall of said housing (2) and having an internal portion (38) extending into said second sub volume and an external portion (39) extending away from said housing (2); and
- a baffle plate (6) arranged within said second sub volume, dividing said second sub volume in a downstream portion and an upstream portion;
- wherein said outlet tube (3) is fixed to said baffle plate (6) at or near a first axial end (32) of said outlet tube (3);
- a sensor device (5) for measuring exhaust gas properties arranged along said external portion (39) of said outlet tube (3);
wherein said baffle plate (6) comprises a first set of baffle plate openings (61) in an area of said baffle plate (6) outside of said first axial end (32) of said outlet tube (3); and
wherein a sidewall of said internal portion (38) of said outlet tube (3) comprises a second set of outlet tube openings (35);
**characterised in that**:
a total surface area defined by said first set of openings (61) is within the range of 0.15A to 0.23A; and
a total surface area defined by said second set of openings (35) is within the range of 0.08A to 0.12A.

2. An exhaust gas treatment device (1) according to claim 1, wherein said first axial end (32) of said outlet tube (3) is closed.

3. An exhaust gas treatment device (1) according to claim 1, further comprising at least one tube end opening (62, 62') in said baffle plate (6) or said first axial end (32) of said outlet tube (3) to allow direct flow from said upstream portion to said outlet tube (3).

4. An exhaust gas treatment device (1) according to any of the previous claims, wherein a distance between said outlet face (41) of said selective catalytic substrate (4) and said baffle plate (6) is within the range of 0.3*(A/pi)^{1/2} to 0.45*(A/pi)^{1/2}.

5. An exhaust gas treatment device (1) according to any of the previous claims, wherein a total surface area defined by said first set of openings (61) is larger than a total surface area of said second set of openings (35).

6. An exhaust gas treatment device (1) according to any of the previous claims, wherein each of the openings of said first set of openings (61) has a size within the range of 0.0009A to 0.0013A.

7. An exhaust gas treatment device (1) according to any of the previous claims, wherein each of the openings of said second set of openings (35) has a size within the range of 0.009A to 0.0015A.

8. An exhaust treatment device (1) according to any of the previous claims, wherein said outlet tube (3) is also fixed to said outer wall of said housing (2) and a distance between a fixation location of said outlet tube (3) at said outer wall and a fixation location of said outlet tube (3) at said baffle plate (6) is within the range of 0.51*(A/pi)^{1/2} to 0.77*(A/pi)^{1/2}.

9. An exhaust gas treatment device (1) according to any of the previous claims, wherein said outlet tube (3) has a cross-sectional area which is smaller than a combined total surface area of said one or more tube end openings (62, 62'), if such openings are present, and said one or more openings in said baffle plate (6).

10. An exhaust gas treatment device (1) according to any of the previous claims, wherein said outlet tube (3) comprises a cross-sectional area in the range of 0.12A to 0.20A.

11. An exhaust gas treatment device (1) according to any of the previous claims 3 to 10, in as far as dependent on claim 3, wherein a total surface area of said one or more tube end openings (62, 62') is within the range of 0.01A to 0.20A.

12. An exhaust gas treatment device (1) according to any of the previous claims 3 to 11, in as far as dependent on claim 3, wherein a total surface area of said one or more tube end openings (62, 62') and said first set of one or more openings (61) in said baffle plate (6) is within the range of 0.16A to 0.43A.

13. An exhaust gas treatment device (1) according to any of the previous claims, wherein a distance between said outlet face (41) of said selective catalytic substrate (4) and said sensor device (5) is within the range of 1.07*(A/pi)^{1/2} to 1.61*(A/pi)^{1/2}.

## Patentansprüche

1. Abgasbehandlungseinrichtung (1), die Folgendes umfasst:
- ein Gehäuse (2), das ein inneres Volumen und einen Einlass (24) und einen Auslass (25) umfasst, wobei das Gehäuse (2) eine Strömungsbahn für Abgas von dem Einlass (24) zu dem Auslass (25) definiert,
- mindestens ein selektives katalytisches Substrat (4), das innerhalb des Gehäuses (2) angeordnet ist, wobei es eine Auslassfläche (41), mit einer Oberfläche A und die das innere Volumen in ein erstes Teilvolumen nahe dem Einlass (24) und ein zweites Teilvolumen nahe dem Auslass (25) teilt, aufweist,
- wobei der Auslass (25) zumindest teilweise durch eine Auslassröhre (3) definiert wird,
- wobei sich die Auslassröhre (3) durch eine Außenwand des Gehäuses (2) erstreckt und einen inneren Abschnitt (38), der sich in das zweite Teilvolumen erstreckt, und einen äußeren Abschnitt (39), der sich weg von dem Gehäuse (2) erstreckt, aufweist, und
- eine Prallplatte (6), die innerhalb des zweiten Teilvolumens angeordnet ist, wobei sie das zweite Teilvolumen in einen stromabwärts gelegenen Abschnitt und einen stromaufwärts gelegenen Abschnitt teilt,
- wobei die Auslassröhre (3) an oder nahe einem ersten axialen Ende (32) der Auslassröhre (3) an der Prallplatte (6) befestigt ist,
- eine Sensoreinrichtung (5) zum Messen von Abgaseigenschaften, die entlang des äußeren Abschnitts (39) der Auslassröhre (3) angeordnet ist,
wobei die Prallplatte (6) einen ersten Satz von Prallplattenöffnungen (61) in einem Bereich der Prallplatte (6), außerhalb des ersten axialen Endes (32) der Auslassröhre (3), umfasst und
wobei eine Seitenwand des inneren Abschnitts (38) der Auslassröhre (3) einen zweiten Satz von Auslassröhrenöffnungen (35) umfasst,
**dadurch gekennzeichnet, dass**:
eine Gesamtoberfläche, die durch den ersten Satz von Öffnungen (61) definiert wird, innerhalb des Bereichs von 0,15 A bis 0,23 A liegt, und
eine Gesamtoberfläche, die durch den zweiten Satz von Öffnungen (35) definiert wird, innerhalb des Bereichs von 0,08 A bis 0,12 A liegt.

2. Abgasbehandlungseinrichtung (1) nach Anspruch 1, wobei das erste axiale Ende (32) der Auslassröhre (3) geschlossen ist.

3. Abgasbehandlungseinrichtung (1) nach Anspruch 1, die ferner mindestens eine Röhrenendöffnung (62, 62') in der Prallplatte (6) oder dem ersten axialen Ende (32) der Auslassröhre (3) umfasst, um einen direkten Strom von dem stromaufwärts gelegenen Abschnitt zu dem Auslassrohr (3) zu ermöglichen.

4. Abgasbehandlungseinrichtung (1) nach einem der vorhergehenden Ansprüche, wobei eine Entfernung zwischen der Auslassfläche (41) des selektiven katalytischen Substrats (4) und der Prallplatte (6) innerhalb des Bereichs von 0,3*(A/pi)^{1/2} bis 0,45*(A/pi)^{1/2} liegt.

5. Abgasbehandlungseinrichtung (1) nach einem der vorhergehenden Ansprüche, wobei eine Gesamtoberfläche, die durch den ersten Satz von Öffnungen (61) definiert wird, größer ist als eine Gesamtoberfläche, die durch den zweiten Satz von Öffnungen (35) definiert wird.

6. Abgasbehandlungseinrichtung (1) nach einem der vorhergehenden Ansprüche, wobei jede der Öffnungen des ersten Satzes von Öffnungen (61) eine Größe innerhalb des Bereichs von 0,0009 A bis 0,0013 A aufweist.

7. Abgasbehandlungseinrichtung (1) nach einem der vorhergehenden Ansprüche, wobei jede der Öffnungen des zweiten Satzes von Öffnungen (35) eine Größe innerhalb des Bereichs von 0,009 A bis 0,0015 A aufweist.

8. Abgasbehandlungseinrichtung (1) nach einem der vorhergehenden Ansprüche, wobei die Auslassröhre (3) ebenfalls an der Außenwand des Gehäuses (2) befestigt ist und eine Entfernung zwischen einer Befestigungsposition der Auslassröhre (3) an der Außenwand und einer Befestigungsposition der Auslassröhre (3) an der Prallplatte (6) innerhalb des Bereichs von 0,51*(A/pi)^{1/2} bis 0,77*(A/pi)^{1/2} liegt.

9. Abgasbehandlungseinrichtung (1) nach einem der vorhergehenden Ansprüche, wobei die Auslassröhre (3) eine Querschnittsfläche aufweist, die kleiner ist als eine kombinierte Gesamtoberfläche der einen oder der mehreren Röhrenendöffnungen (62, 62'), falls solche Öffnungen vorhanden sind, und der einen oder mehreren Öffnungen in der Prallplatte (6).

10. Abgasbehandlungseinrichtung (1) nach einem der vorhergehenden Ansprüche, wobei die Auslassröhre (3) eine Querschnittsfläche in dem Bereich von 0,12 A bis 0,20 A umfasst.

11. Abgasbehandlungseinrichtung (1) nach einem der vorhergehenden Ansprüche 3 bis 10, sofern abhängig von Anspruch 3, wobei eine Gesamtoberfläche der einen oder der mehreren Röhrenendöffnungen (62, 62') innerhalb des Bereichs von 0,01 A bis 0,20 A liegt.

12. Abgasbehandlungseinrichtung (1) nach einem der vorhergehenden Ansprüche 3 bis 11, sofern abhängig von Anspruch 3, wobei eine Gesamtoberfläche der einen oder der mehreren Röhrenendöffnungen (62, 62') und des ersten Satzes von einer oder mehreren Öffnungen (61) in der Prallplatte (6) innerhalb des Bereichs von 0,16 A bis 0,43 A liegt.

13. Abgasbehandlungseinrichtung (1) nach einem der vorhergehenden Ansprüche, wobei eine Entfernung zwischen der Auslassfläche (41) des selektiven katalytischen Substrats (4) und der Sensoreinrichtung (5) innerhalb des Bereichs von 1,07*(A/pi)^{1/2} bis 1,61*(A/pi)^{1/2} liegt.

## Revendications

1. Dispositif de traitement de gaz d'échappement (1), comprenant :
- un logement (2), comprenant un volume intérieur et une entrée (24) et une sortie (25), ledit logement (2) définissant un chemin d'écoulement pour des gaz d'échappement allant de ladite entrée (24) jusqu'à ladite sortie (25) ;
- au moins un substrat catalytique sélectif (4) disposé à l'intérieur dudit logement (2), ayant une face de sortie (41) avec une aire surfacique A et divisant ledit volume intérieur en un premier sous-volume près de ladite entrée (24) et en un second sous-volume près de ladite sortie (25) ;
- ladite sortie (25) étant au moins partiellement définie par un tube de sortie (3) ;
- ledit tube de sortie (3) s'étendant à travers une paroi extérieure dudit logement (2) et ayant une portion interne (38) s'étendant jusque dans ledit second sous-volume et une portion externe (39) s'étendant à l'écart dudit logement (2) ; et
- une plaque déflectrice (6) disposée à l'intérieur dudit second sous-volume, divisant ledit second sous-volume en une portion aval et en une portion amont ;
- dans lequel ledit tube de sortie (3) est fixé à ladite plaque déflectrice (6) au niveau ou près d'une première extrémité axiale (32) dudit tube de sortie (3) ;
- un dispositif capteur (5) pour mesurer des propriétés de gaz d'échappement disposé le long de ladite portion externe (39) dudit tube de sortie (3) ;
dans lequel ladite plaque déflectrice (6) comprend un premier ensemble d'ouvertures de plaque déflectrice (61) dans une zone de ladite plaque déflectrice (6) à l'extérieur de ladite première extrémité axiale (32) dudit tube de sortie (3) ; et
dans lequel une paroi latérale de ladite portion interne (38) dudit tube de sortie (3) comprend un second ensemble d'ouvertures de tube de sortie (35) ;
**caractérisé en ce que** :
une aire surfacique totale définie par ledit premier ensemble d'ouvertures (61) est comprise dans la plage de 0,15A à 0,23A ; et
une aire surfacique totale définie par ledit second ensemble d'ouvertures (35) est comprise dans la plage de 0,08A à 0,12A.

2. Dispositif de traitement de gaz d'échappement (1) selon la revendication 1, dans lequel ladite première extrémité axiale (32) dudit tube de sortie (3) est fermée.

3. Dispositif de traitement de gaz d'échappement (1) selon la revendication 1, comprenant en outre au moins une ouverture d'extrémité de tube (62, 62') dans ladite plaque déflectrice (6) ou ladite première extrémité axiale (32) dudit tube de sortie (3) pour permettre un écoulement direct depuis ladite partie amont jusqu'audit tube de sortie (3).

4. Dispositif de traitement de gaz d'échappement (1) selon l'une quelconque des revendications précédentes, dans lequel une distance entre ladite face de sortie (41) dudit substrat catalytique sélectif (4) et ladite plaque déflectrice (6) est comprise dans la plage de 0,3*(A/pi)^{1/2} à 0,45*(A/pi)^{1/2}.

5. Dispositif de traitement de gaz d'échappement (1) selon l'une quelconque des revendications précédentes, dans lequel une aire surfacique totale définie par ledit premier ensemble d'ouvertures (61) est plus grande qu'une aire surfacique totale dudit second ensemble d'ouvertures (35).

6. Dispositif de traitement de gaz d'échappement (1) selon l'une quelconque des revendications précédentes, dans lequel chacune des ouvertures dudit premier ensemble d'ouvertures (61) a une taille comprise dans la plage de 0,0009A à 0,0013A.

7. Dispositif de traitement de gaz d'échappement (1) selon l'une quelconque des revendications précédentes, dans lequel chacune des ouvertures dudit second ensemble d'ouvertures (35) a une taille comprise dans la plage de 0,009A à 0,0015A.

8. Dispositif de traitement de gaz d'échappement (1) selon l'une quelconque des revendications précédentes, dans lequel ledit tube de sortie (3) est également fixé à ladite paroi extérieure dudit logement (2) et une distance entre un emplacement de fixation dudit tube de sortie (3) au niveau de ladite paroi extérieure et un emplacement de fixation dudit tube de sortie (3) au niveau de ladite plaque déflectrice (6) est comprise dans la plage de 0,51*(A/pi)^{1/2} à 0,77*(A/pi)^{1/2}.

9. Dispositif de traitement de gaz d'échappement (1) selon l'une quelconque des revendications précédentes, dans lequel ledit tube de sortie (3) a une section transversale qui est plus petite qu'une aire surfacique totale combinée desdites une ou plusieurs ouvertures d'extrémité de tube (62, 62'), si de telles ouvertures sont présentes, et desdites une ou plusieurs ouvertures dans ladite plaque déflectrice (6).

10. Dispositif de traitement de gaz d'échappement (1) selon l'une quelconque des revendications précédentes, dans lequel ledit tube de sortie (3) comprend une section transversale dans la plage de 0,12A à 0,20A.

11. Dispositif de traitement de gaz d'échappement (1) selon l'une quelconque des revendications précédentes 3 à 10, dans la mesure où elles dépendent de la revendication 3, dans lequel une aire surfacique totale desdites une ou plusieurs ouvertures d'extrémité de tube (62, 62') est comprise dans la plage de 0,01A à 0,20A.

12. Dispositif de traitement de gaz d'échappement (1) selon l'une quelconque des revendications précédentes 3 à 11, dans la mesure où elles dépendent de la revendication 3, dans lequel une aire surfacique totale desdites une ou plusieurs ouvertures d'extrémité de tube (62, 62') et dudit premier ensemble d'une ou plusieurs ouvertures (61) dans ladite plaque déflectrice (6) est comprise dans la plage de 0,16A à 0,43A.

13. Dispositif de traitement de gaz d'échappement (1) selon l'une quelconque des revendications précédentes, dans lequel une distance entre ladite face de sortie (41) dudit substrat catalytique sélectif (4) et ledit dispositif capteur (5) est comprise dans la plage de 1,07*(A/pi)^{1/2} à 1,61*(A/pi)^{1/2}.
